# EUROPEAN PATENT APPLICATION

(11) **EP 4 693 879 A1**
(43) Date of publication of application: **11.02.2026**
(21) Application number: 23930236.7
(22) Date of filing: 24.03.2023
(51) Int. Cl.: H02M 7/49, H02M 7/48

(54) **POWER CONVERSION DEVICE**

(71) Applicant: MITSUBISHI ELECTRIC CORPORATION, Chiyoda-ku Tokyo 100-8310 (JP)
(72) Inventor: MINAKUCHI, Hiroyuki, Tokyo 100-8310 (JP); TATSUMI, Tomohiko, Tokyo 100-8310 (JP); TANI, Naoki, Tokyo 100-8310 (JP); TAKEDA, Masatoshi, Tokyo 100-8310 (JP)
(74) Representative: Witte, Weller & Partner Patentanwälte mbB
(86) International application number: PCT/JP2023/011923
(87) International publication number: WO 2024/201595

(57) **Abstract**

A power conversion apparatus (100) includes a power converter (30) including first to third arms (7a to 7c), and a switchgear (50). Each of the first to third arms (7a to 7c) includes a plurality of unit converters (9) connected in series. Each of the plurality of unit converters (9) includes a plurality of switching elements (Q1 to Q4) and a power storage element (16) connected to the plurality of switching elements. The switchgear (50) includes a first switch (10a to 10c) provided on a first end side of each of the first to third arms (7a to 7c), a second switch (11a to 11c) provided on a second end side of each of the first to third arms (7a to 7c), a bus (24a to 24c) connecting the first switch (10a to 10c) to the second switch (11a to 11c), and a power terminal (20a to 20c) provided on each bus (24a to 24c) for transmitting and receiving electric power between the power converter (30) and a three-phase AC power supply (80).

## Description

### TECHNICAL FIELD

The present disclosure relates to a power conversion apparatus.

### BACKGROUND ART

A modular multilevel converter (MMC) is known as a high-capacity power conversion apparatus installed in a power system. The MMC is composed of arms including a plurality of cascade-connected unit converters, which are called cells. The cell includes a plurality of semiconductor switches and a direct-current (DC) capacitor, and outputs a voltage across the DC capacitor or a zero voltage by turning on and off the semiconductor switches. The MMC, which can have higher voltage resistance and higher capacity, is a converter that can be interconnected to a power system, and is used in, for example, a static synchronous compensator (STATCOM) or the like.

One of the methods for connecting arms of a three-phase MMC is a delta connection method. A three-phase MMC based on a delta-connected cascade method (hereinafter also referred to as a "delta-connected MMC") has a configuration in which a plurality of cells are cascade-connected and arms, each of which is connected in series with a reactor, are delta-connected. For example, NPL 1 discloses a power conversion apparatus (e.g., reactive power compensation apparatus) configured of a delta-connected MMC.

### CITATION LIST

### NON PATENT LITERATURE

NPL 1: Akihiro Matsuda, Daisuke Yamanaka, Taichiro Tsuchiya, "Power System Stabilizing within USA by Application of FACTS Devices", MITSUBISHI DENKI GIHO, 2018, Vol. 92, No. 11

### SUMMARY OF INVENTION

### TECHNICAL PROBLEM

As described in NPL 1, in a power conversion apparatus configured of a delta-connected MMC, a phase current flows through each arm, and a large line current, which is √3 times the phase current, flows through a switch connected to a main transformer and a switch connected in parallel to a pre insertion resistor. Thus, in a power conversion apparatus configured to have a higher capacity by increasing the rated current of a self-commutated converter, special switches with a large current rating need to be used for these switches.

An object in an aspect of the present disclosure is to reduce a current flowing through a switch in a power conversion apparatus configured of a three-phase MMC.

### SOLUTION TO PROBLEM

According to an embodiment, a power conversion apparatus connected to a three-phase alternating-current (AC) power supply is provided. The power conversion apparatus includes a power converter including a first arm, a second arm, and a third arm, and a switchgear connected to the first to third arms. Each of the first to third arms includes a plurality of unit converters connected in series. Each of the plurality of unit converters includes a plurality of switching elements, and a power storage element connected to the plurality of switching elements. The switchgear includes a first switch provided on a first end side of each of the first to third arms, a second switch provided on a second end side of each of the first to third arms, a bus connecting the first switch provided on the first end side of one arm of the first to third arms to the second switch provided on the second end side of another arm of the first to third arms, and a power terminal provided on each bus for transmitting and receiving electric power between the power converter and the three-phase AC power supply.

### ADVANTAGEOUS EFFECTS OF INVENTION

According to the present disclosure, a current flowing through a switch can be reduced in a power conversion apparatus configured of a three-phase MMC.

### BRIEF DESCRIPTION OF DRAWINGS

Fig. 1 is a diagram for illustrating an overall configuration example of a power conversion system according to Embodiment 1.
Fig. 2 shows a configuration example of a power conversion apparatus according to Embodiment 1.
Fig. 3 shows a configuration example of a switchgear according to Embodiment 1.
Fig. 4 shows a configuration example of an arm.
Fig. 5 shows a configuration example of a cell.
Fig. 6 shows a configuration example of a switchgear according to a comparative example.
Fig. 7 shows a configuration example of a power conversion apparatus according to Embodiment 2.
Fig. 8 shows a configuration example of a switchgear according to Embodiment 2.
Fig. 9 is a diagram for illustrating a path of a charging current according to Embodiment 2.
Fig. 10 shows a configuration example of a power conversion apparatus according to Embodiment 3.
Fig. 11 shows a configuration example of a switchgear according to Embodiment 3.
Fig. 12 shows a first aspect of an initial charging method for a power converter according to Embodiment 3.
Fig. 13 shows a second aspect after the first aspect shown in Fig. 12.

### DESCRIPTION OF EMBODIMENTS

The present embodiment will be described below with reference to the drawings. In the description below, the same components have the same reference characters allotted, and their names and functions are also the same. Therefore, detailed description thereof will not be repeated.

### Embodiment 1.

### <System Configuration>

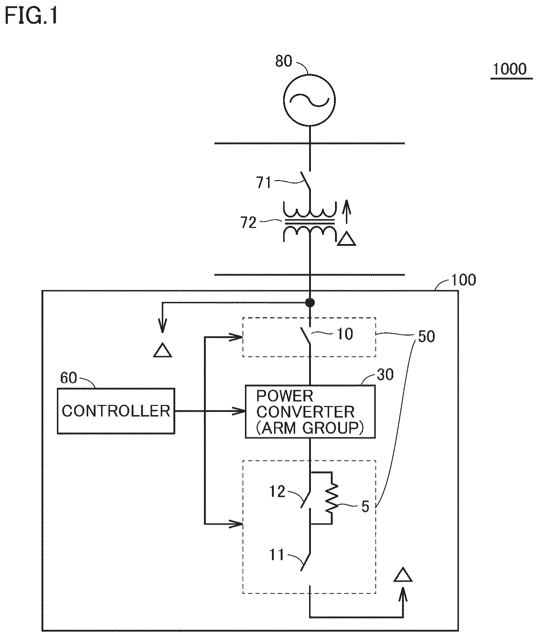

Fig. 1 is a diagram for illustrating an overall configuration example of a power conversion system 1000 according to Embodiment 1. Referring to Fig. 1, power conversion system 1000 includes a three-phase AC power supply 80, a switch 71, a transformer 72, and a power conversion apparatus 100.

Power conversion apparatus 100 is connected to three-phase AC power supply 80 via transformer 72 and switch 71. Specifically, one of the three-phase terminals of transformer 72 is connected to three-phase AC power supply 80 via switch 71, and the other of the three-phase terminals of transformer 72 is connected to power conversion apparatus 100. In Fig. 1, power conversion apparatus 100 is connected to three-phase AC power supply 80 via transformer 72, but it may also be connected to three-phase AC power supply 80 via an interconnection reactor instead of transformer 72.

Power conversion apparatus 100 includes a power converter 30 configured as a delta-connected MMC, a switchgear 50, and a controller 60 that controls power converter 30 and switchgear 50. Power converter 30 includes three arms. Each arm includes a plurality of unit converters connected in series. The "unit converter" is also referred to as a "sub module" or a "converter cell".

Switchgear 50 includes a switch 10, a switch 11, a switch 12, and a charging resistor 5. Switch 12 and charging resistor 5 are connected in parallel to each other.

Controller 60 can be configured of, for example, a microcomputer or the like. As an example, controller 60, which includes an unshown built-in a memory and an unshown built-in control processing unit (CPU), can perform a control operation described later through software processing by the CPU executing a program stored in the memory in advance. At least part of controller 60 can be configured using a circuit such as an application specific integrated circuit (ASIC) and a field programmable gate array (FPGA).

Typically, controller 60 receives, from each detector (not shown), detection signals of an AC voltage of three-phase AC power supply 80, a current flowing through each arm of power converter 30, a voltage of a power storage element included in each converter cell, and the like. Based on these detection signals, controller 60 outputs a gate control signal for controlling the operation of each converter cell. For example, the gate control signal is a pulse width modulation (PWM) signal.

Controller 60 also controls the opening and closing operations of each of switches 10 to 12 included in switchgear 50. Specifically, controller 60 transmits, to each of switches 10 to 12, an opening signal (i.e., ON signal) for opening the switch and a closing signal (i.e., OFF signal) for closing the switch.

### <Power Conversion Apparatus>

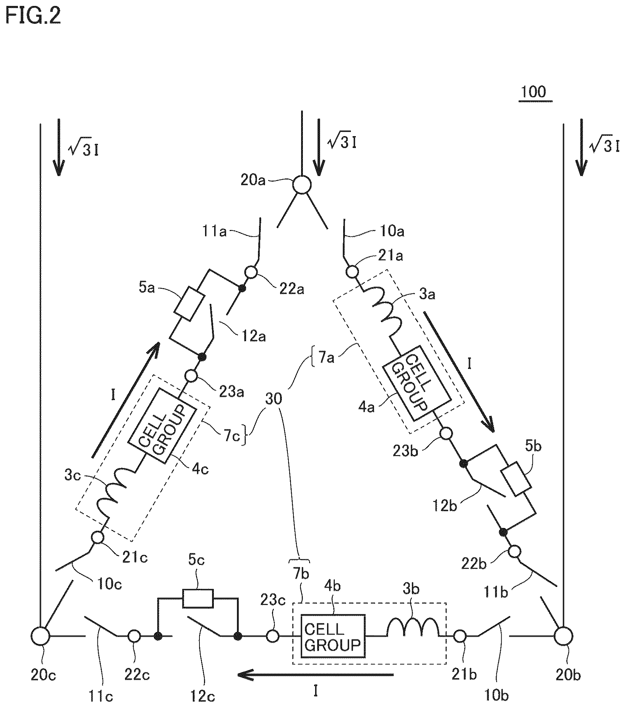

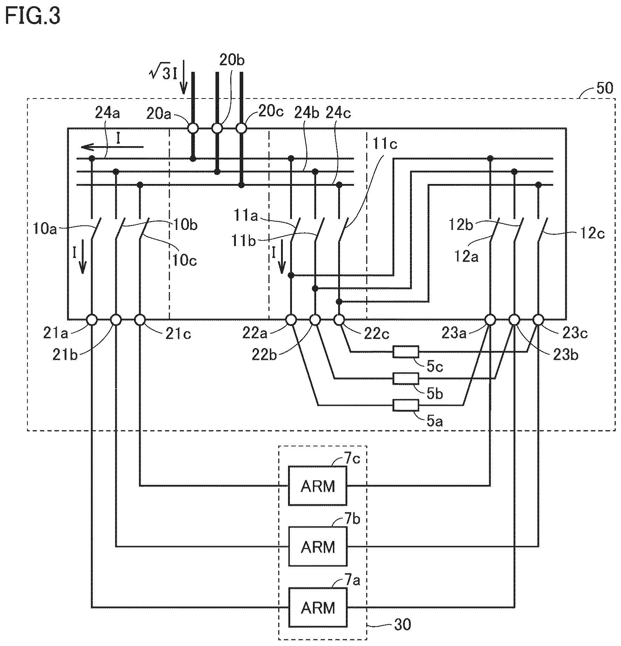

Fig. 2 shows a configuration example of power conversion apparatus 100 according to Embodiment 1. Controller 60 is not shown in Fig. 2. Fig. 3 shows a configuration example of switchgear 50 according to Embodiment 1. Referring to Figs. 2 and 3, power converter 30 includes arms 7a to 7c. Arm 7a includes a reactor 3a and a cell group 4a. Arm 7b includes a reactor 3b and a cell group 4b. Arm 7c includes a reactor 3c and a cell group 4c.

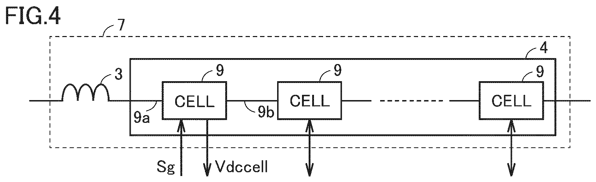

Fig. 4 shows a configuration example of an arm. The configurations of arms 7a, 7b, 7c are the same, and thus, one arm will be representatively described as arm 7.

Referring to Fig. 4, arm 7 includes a plurality of series-connected converter cells (hereinafter simply referred to as "cells" as well) 9. Each of the plurality of cells 9 performs bidirectional power conversion in accordance with a gate signal Sg from controller 60. For example, in each of the three arms 7a, 7b, 7c, n (n is an integer greater than or equal to 2) number of cells 9 are connected in series. In this case, the total number of cells 9 included in power converter 30 is 3n. The number of cells 9 included in each of arms 7a, 7b, 7c does not need to be equal, and is only required to be greater than or equal to the minimum number required for the operation of power conversion apparatus 100. Thus, the total number of cells 9 included in power conversion apparatus 100 is not also limited to 3n.

Arm 7 further includes a reactor 3 connected in series with the plurality of cells 9. Reactor 3 is disposed to suppress a circulating current flowing in the delta connection. As such, arm 7 is composed of a cell group including the plurality of cells 9, and reactor 3.

Fig. 4 shows a configuration in which reactor 3 is inserted into an output terminal 9a, but the present disclosure is not limited to this configuration. Reactor 3 is only required to be connected in series at any position in the power line connecting n number of cells 9. Also, Fig. 4 shows an example in which one reactor 3 is provided for one arm 7, but reactor 3 is only required to be connected to at least one of arms 7a, 7b, 7c, and the arm to be connected can be selected as appropriate.

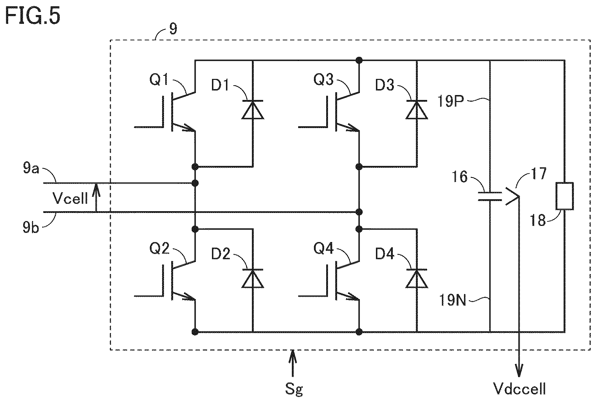

Fig. 5 shows a configuration example of a cell. Referring to Fig. 5, cell 9 according to a first configuration example has a so-called full-bridge configuration. Specifically, cell 9 includes a power storage element 16, a voltage detector 17, a resistor 18, switching elements Q1 to Q4, diodes D1 to D4, and a pair of output terminals 9a, 9b.

Power storage element 16 has a first terminal and a second terminal connected to a positive electrode line 19P and a negative electrode line 19N, respectively. Power storage element 16 is, for example, a capacitor that stores DC power. Voltage detector 17 detects a DC voltage Vdccell between the terminals of power storage element 16 and outputs a signal indicating the detected DC voltage Vdccell to controller 60.

Resistor 18 is connected in parallel to power storage element 16. Resistor 18 is used in self-discharging of electric power of power storage element 16.

Switching elements Q1 to Q4 are self-turn-off power semiconductor elements, and are configured of, for example, insulated gate bipolar transistors (IGBTs). Switching elements Q1 to Q4 are connected to power storage element 16 via positive electrode line 19P and negative electrode line 19N.

Switching elements Q1, Q2 are connected in series between a pair of power lines (i.e., positive electrode line 19P and negative electrode line 19N). Switching elements Q3, Q4 are connected in series between the pair of power lines. Specifically, first terminals of switching elements Q1, Q3 are connected to positive electrode line 19P, and second terminals of switching elements Q1, Q3 are connected to output terminals 9a, 9b, respectively. First terminals of switching elements Q2, Q4 are connected to negative electrode line 19N, and second terminals of switching elements Q2, Q4 are connected to output terminals 9a, 9b, respectively. Diodes D1 to D4 are connected in anti-parallel to switching elements Q1 to Q4, respectively.

Cell 9 controls ON and OFF (i.e., switching operation) of switching elements Q1 to Q4 based on gate signal Sg from controller 60. Cell 9 outputs a voltage of the same polarity as that of the voltage of power storage element 16, a voltage of the opposite polarity, or a zero voltage to between output terminals 9a, 9b as a cell voltage Vcell in response to the switching operation of switching elements Q1 to Q4.

Cell 9 according to a second configuration example has a so-called half-bridge configuration, rather than the full-bridge configuration shown in Fig. 5. Cell 9 according to the second configuration example has a configuration in which switching elements Q3, Q4 and diodes D3, D4 are removed from cell 9 according to the first configuration example shown in Fig. 5, and the position of connection of output terminal 9b is changed to negative electrode line 19N. Cell 9 according to the second configuration example outputs a voltage of the same polarity as that of the voltage of power storage element 16 or a zero voltage to between output terminals 9a, 9b as cell voltage Vcell by controlling ON and OFF (i.e., switching operation) of switching elements Q1, Q2 based on gate signal Sg.

The configuration of cell 9 shown in Fig. 4 is not limited to the first configuration example and the second configuration example. The configuration of cell 9 is only required to include a series circuit of a plurality of (e.g., two) switching elements and a capacitor connected in parallel to this series circuit and to selectively output a voltage between output terminals 9a and 9b in response to the switching operation of the plurality of switching elements.

Referring again to Figs. 2 and 3, switchgear 50 is connected to each of arms 7a to 7c. Switchgear 50 includes switches 10a to 10c, switches 11a to 11c, and switches 12a to 12c. Switches 10a to 10c correspond to switch 10 in Fig. 1, switches 11a to 11c correspond to switch 11 in Fig. 1, and switches 12a to 12c correspond to switch 12 in Fig. 1. Hereinafter, switches 10a to 10c will also be collectively referred to as "switch 10", switches 11a to 11c will also be collectively referred to as "switch 11", and switches 12a to 12c will also be collectively referred to as "switch 12".

Switchgear 50 further includes power terminals 20a to 20c (hereinafter collectively referred to as "power terminal 20" as well), terminals 21a to 21c (hereinafter collectively referred to as "terminal 21" as well), terminals 22a to 22c (hereinafter collectively referred to as "terminal 22" as well), terminals 23a to 23c (hereinafter collectively referred to as "terminal 23" as well), and charging resistors 5a to 5c (hereinafter collectively referred to as "charging resistor 5" as well).

Switches 10a, 10b, 10c are provided on first end sides of arms 7a, 7b, 7c, respectively. Specifically, switch 10a is provided between terminal 21a and power terminal 20a, switch 10b is provided between terminal 21b and power terminal 20b, and switch 10c is provided between terminal 21c and power terminal 20c. Switch 10 is provided to disconnect power conversion apparatus 100 from three-phase AC power supply 80.

Switches 11a, 11b, 11c are provided on second end sides of arms 7c, 7a, 7b, respectively. Specifically, switch 11a is provided between terminal 22a and power terminal 20a, switch 11b is provided between terminal 22b and power terminal 20b, and switch 11c is provided between terminal 22c and power terminal 20c. Switch 11 is provided to disconnect power conversion apparatus 100 from three-phase AC power supply 80.

Charging resistors 5a to 5c are connected in series with second ends of arms 7a to 7c, respectively. Switches 12a to 12c are connected in parallel to charging resistors 5a to 5c, respectively. Specifically, charging resistor 5a and switch 12a are connected between terminal 22a and terminal 23a, charging resistor 5b and switch 12b are connected between terminal 22b and terminal 23b, and charging resistor 5c and switch 12c are connected between terminal 22c and terminal 23c. Each switch 12 is provided to bypass each charging resistor 5. Switches 11a to 11c are connected in series with charging resistors 5a to 5c, respectively.

As shown in Fig. 3, switchgear 50 further includes buses 24a to 24c. Bus 24a connects switch 10a provided on the first end side of arm 7a to switch 11a provided on the second end side of arm 7c. Bus 24b connects switch 10b provided on the first end side of arm 7b to switch 11b provided on the second end side of arm 7a. Bus 24c connects switch 10c provided on the first end side of arm 7c to switch 11c provided on the second end side of arm 7b.

Power terminal 20, which is provided on each bus 24, is a terminal for transmitting and receiving electric power between power converter 30 and three-phase AC power supply 80. Specifically, power terminal 20a is provided between switch 10a and switch 11a on bus 24a. Power terminal 20b is provided between switch 10b and switch 11b on bus 24b. Power terminal 20c is provided between switch 10c and switch 11c on bus 24c.

In power conversion apparatus 100, initial charging of power storage element 16 of each cell 9 is performed at startup. Controller 60 controls each switch 10 and each switch 11 to be closed (ON state) and controls each switch 12 to be opened (OFF state) during initial charging of power storage element 16. More specifically, controller 60 turns on each switch 10 and each switch 11 while turning off each switch 12. This allows a current to flow through each charging resistor 5, thereby reducing the magnitude of an inrush current to each cell 9 at startup.

Controller 60 controls each switch 10, each switch 11, and each switch 12 to enter the ON state during normal operation of power converter 30 after initial charging is complete. This causes charging resistor 5 to be bypassed. Controller 60 controls each switch 10, each switch 11, and each switch 12 to enter the OFF state during discharging of power storage element 16 when stopping the operation of power conversion apparatus 100. As a result, electric power of power storage element 16 is gradually discharged via resistor 18.

During normal operation (or during initial charging) of power conversion apparatus 100, each arm 7 is delta-connected. Thus, if the current (i.e., line current) flowing from three-phase AC power supply 80 into power terminal 20 of power conversion apparatus 100 is "√3I", the current (i.e., phase current) flowing through each arm 7 and each of switches 10 to 12 is "I", which is 1/√3 times the line current.

As described above, in power conversion apparatus 100 according to Embodiment 1, each of switches 10 to 12 is provided inside the delta circuit. As a result, the current flowing through each of switches 10 to 12 is reduced to 1/√3 times the current in the case where each of switches 10 to 12 is provided outside the delta circuit (i.e., on the three-phase AC power supply 80 side of each power terminal 20). This allows a switch of standard current rating to be used as each of switches 10 to 12, leading to a reduction in the cost of power conversion apparatus 100.

Further, referring to Fig. 3, in switchgear 50 according to Embodiment 1, power terminal 20, which is a point of connection between bus 24 and the connection bus connecting power conversion apparatus 100 to transformer 72, is provided between switch 10 and switch 11 on bus 24. Consequently, the current flowing through bus 24 can also be reduced to 1/√3 times the current flowing through the connection bus.

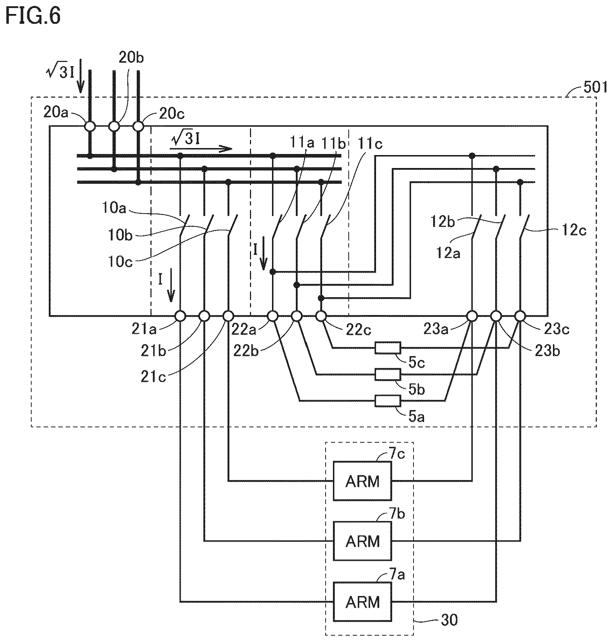

Fig. 6 shows a configuration example of a switchgear 501 according to a comparative example. Referring to Fig. 6, switchgear 501 is different from switchgear 50 of Fig. 3 in that power terminal 20 is provided not between switch 10 and switch 11 but is provided on the first end side (left side in Fig. 6) of switch 10 and switch 11. In the description below, the current flowing through the connection bus is assumed to be "√3I".

According to switchgear 501 shown in Fig. 6, the current flowing through each of switches 10 to 12 is "I", which is reduced compared to the current flowing through the connection bus. However, the current flowing through bus 24 is "√3I", which is the same as the current flowing through the connection bus. This also applies to the case where power terminal 20 is provided on the second end side (right side in Fig. 6) of switch 10 and switch 11.

It can be understood from the above that in switchgear 50 according to Embodiment 1, not only the current flowing through each of switches 10 to 12 but also the current flowing through bus 24 can be reduced to 1/√3 times the current flowing through the connection bus.

### <Advantage>

According to Embodiment 1, the current flowing through each of switches 10 to 12 can be suppressed by providing each of switches 10 to 12 inside the delta circuit. Further, by providing power terminal 20 between switch 10 and switch 11 on bus 24, the current flowing through bus 24 can also be suppressed.

### Embodiment 2.

Embodiment 2 will describe a modification of switchgear 50. The system configuration according to Embodiment 2 is the same as the system configuration of Fig. 1, except for the configuration of switchgear 50. This also applies to Embodiment 3, which will be described later.

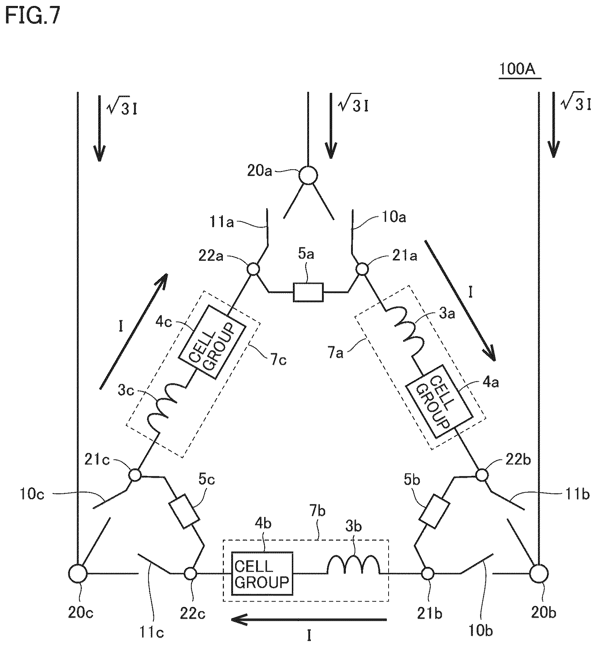

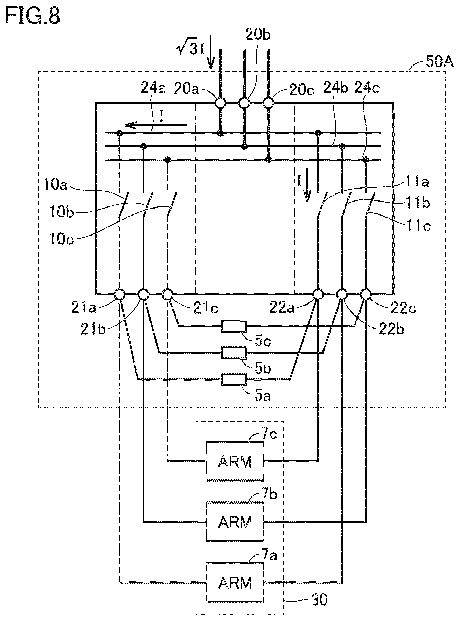

Fig. 7 shows a configuration example of a power conversion apparatus 100A according to Embodiment 2. Fig. 8 shows a configuration example of a switchgear 50A according to Embodiment 2. Referring to Figs. 7 and 8, power conversion apparatus 100A includes power converter 30 and switchgear 50A. The configuration of power converter 30 is the same as that of Embodiment 1.

Switchgear 50A includes switches 10a to 10c, switches 11a to 11c, power terminals 20a to 20c, terminals 21a to 21c, terminals 22a to 22c, and charging resistors 5a to 5c. Switchgear 50A according to Embodiment 2 is different from switchgear 50 according to Embodiment 1 in that it does not include switches 12a to 12c and terminals 23a to 23c.

The positions at which charging resistors 5a to 5c according to Embodiment 2 are disposed are different from those of Embodiment 1. Specifically, charging resistor 5a is connected to terminal 21a disposed between the first end of arm 7a and switch 10a, and terminal 22a disposed between the second end of arm 7c and switch 11a. Charging resistor 5b is connected to terminal 21b disposed between the first end of arm 7b and switch 10b, and terminal 22b disposed between the second end of arm 7a and switch 11b. Charging resistor 5c is connected to terminal 21c disposed between the first end of arm 7c and switch 10c, and terminal 22c disposed between the second end of arm 7b and switch 11c.

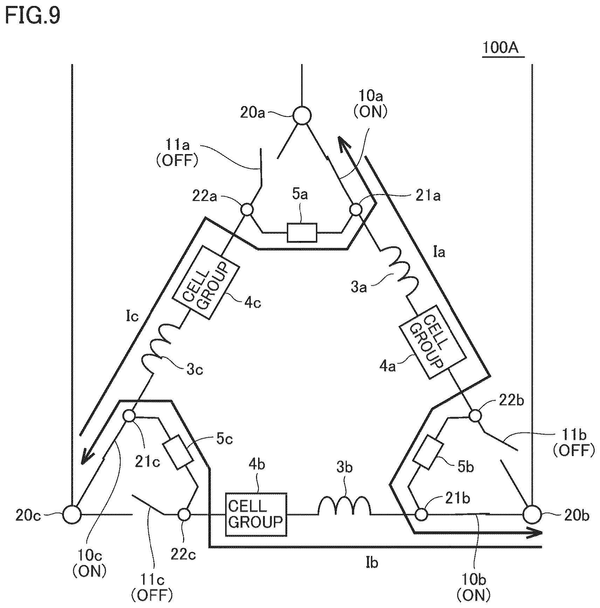

Fig. 9 is a diagram for illustrating a path of a charging current according to Embodiment 2. Referring to Fig. 9, during initial charging of each power storage element 16, controller 60 controls its corresponding switch 10 to enter the ON state and its corresponding switch 11 to enter the OFF state. More specifically, controller 60 turns on each switch 10 while turning off its corresponding switch 11. Consequently, power storage element 16 of each cell group 4 is charged via charging resistor 5 along the path shown in Fig. 9.

A charging current Ia flows through the path of power terminal 20a, reactor 3a, cell group 4a, charging resistor 5b, and power terminal 20b. Thus, power storage element 16 in cell group 4a is charged. A charging current Ib flows through the path of power terminal 20b, reactor 3b, cell group 4b, charging resistor 5c, and power terminal 20c. Thus, power storage element 16 in cell group 4b is charged. A charging current Ic flows through the path of power terminal 20c, reactor 3c, cell group 4c, charging resistor 5a, and power terminal 20a. Thus, power storage element 16 in cell group 4c is charged.

Controller 60 turns on each switch 11 when initial charging is complete. In other words, controller 60 controls each switch 10 and each switch 11 to enter the ON state during normal operation of power converter 30. Consequently, each of switches 10, 11 is turned on, and accordingly, its corresponding charging resistor 5 is bypassed.

During discharging of each power storage element 16, controller 60 controls its corresponding switch 10 and its corresponding switch 11 to enter the OFF state. As a result, each charging resistor 5 is connected in series with its corresponding arm 7. Thus, electric power of power storage element 16 in each cell group 4 can be discharged via its corresponding charging resistor 5, leading to a reduced discharging time. For example, in Embodiment 1, self-discharging of the electric power of power storage element 16 is necessary, leading to a very long discharging time. Contrastingly, in Embodiment 2, discharging can be performed via each charging resistor 5, leading to a significant reduction in discharging time. Embodiment 2 is similar to Embodiment 1 in that the current flowing through each of switches 10, 11 and bus 24 can be suppressed during initial charging and during normal operation.

### <Advantage>

Embodiment 2 achieves the advantage of Embodiment 1 and eliminates the need for switch 12. Thus, Embodiment 2 can reduce the manufacturing cost of the power conversion apparatus by a larger amount and provide a more compact configuration than Embodiment 1. In addition, the discharging time of power storage element 16 can be greatly reduced.

### Embodiment 3.

Embodiment 3 will describe another modification of switchgear 50.

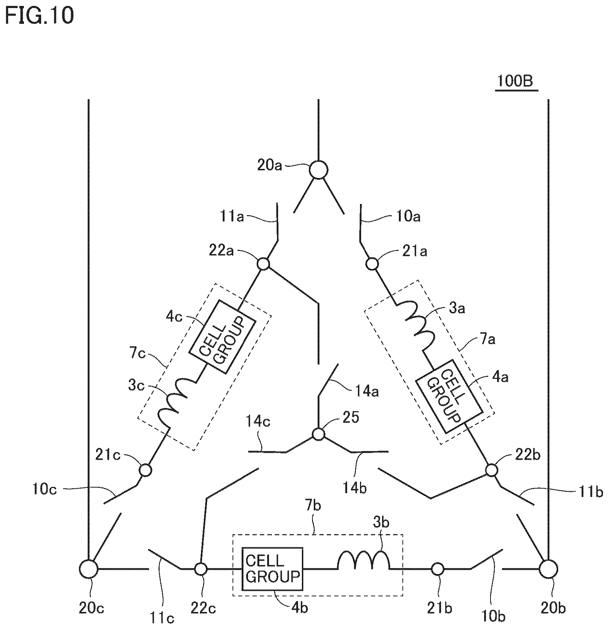

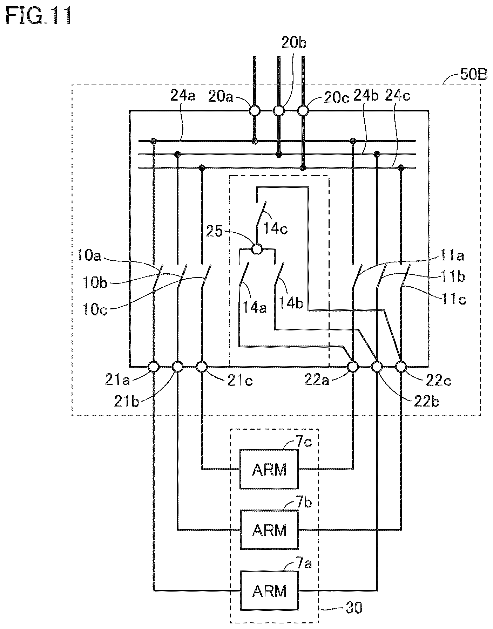

Fig. 10 shows a configuration example of a power conversion apparatus 100B according to Embodiment 3. Fig. 11 shows a configuration example of a switchgear 50B according to Embodiment 3. Referring to Figs. 10 and 11, power conversion apparatus 100B includes power converter 30 and switchgear 50B. The configuration of power converter 30 is the same as that of Embodiment 1.

Switchgear 50B includes switches 10a to 10c, switches 11a to 11c, switches 14a to 14c, power terminals 20a to 20c, terminals 21a to 21c, terminals 22a to 22c, and a common terminal 25. Switchgear 50B according to Embodiment 3 is different from switchgear 50 according to Embodiment 1 in that it does not include charging resistors 5a to 5c, switches 12a to 12c, and terminals 23a to 23c, and switches 14a to 14c and common terminal 25 are added.

Switch 14a is provided between common terminal 25 and terminal 22a disposed between the second end of arm 7c and switch 11a. Switch 14b is provided between common terminal 25 and terminal 22b disposed between the second end of arm 7a and switch 11b. Switch 14c is provided between common terminal 25 and terminal 22b disposed between the second end of arm 7b and switch 11c. In other words, switches 14a to 14c have first ends connected to terminals 22a to 22c, respectively, and second ends connected to common terminal 25.

In Embodiment 3, initial charging of power storage element 16 of each cell 9 is performed in two stages at startup of power converter 30. Specifically, controller 60 star-connects each arm 7 by controlling its corresponding switch 10 and its corresponding switch 14 to enter the ON state and its corresponding switch 11 to enter the OFF state. Subsequently, controller 60 delta-connects each arm 7 by controlling its corresponding switch 10 and its corresponding switch 11 to enter the ON state and its corresponding switch 14 to enter the OFF state. By switching from star connection to delta connection, initial charging of each storage element 16 is performed. The following will describe the initial charging method according to Embodiment 3 in detail.

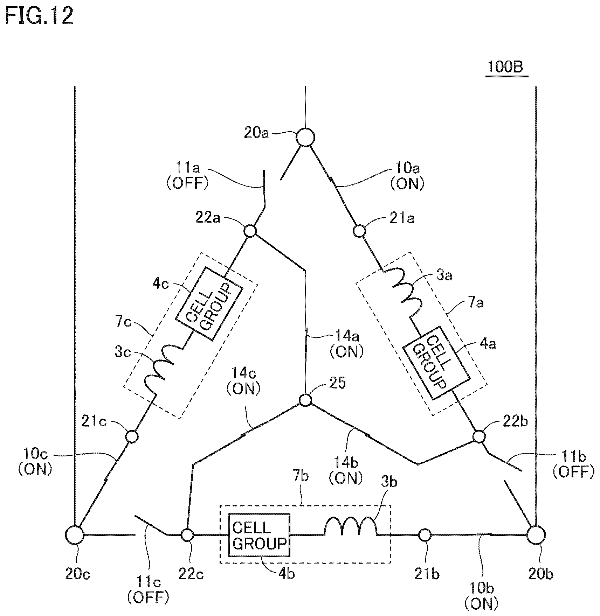

Fig. 12 shows a first aspect of the initial charging method for power converter 30 according to Embodiment 3. Referring to Fig. 12, controller 60 turns off each of switches 11a to 11c and turns on each of switches 14a to 14c. In this case, the second ends of arms 7a to 7c are connected via common terminal 25.

Next, controller 60 turns on each of switches 10a to 10c. Consequently, the first ends of arms 7a to 7c are connected to power terminals 20a to 20c, respectively, and each arm 7 is star-connected. In addition, a phase voltage 1/√3 times the power supply voltage (i.e., line voltage) is applied to each arm 7. When each arm 7 is delta-connected, a phase voltage equal to the line voltage is applied to each arm 7.

Thus, the current (i.e., initial charging current) flowing through each star-connected arm 7 as shown in Fig. 12 is reduced to 1/√3 times the current flowing through its corresponding delta-connected arm 7. The current flowing through each arm 7 causes power storage element 16 of its corresponding cell 9 to be initially charged (hereinafter also referred to as "first initial charging"). During the first initial charging, the current flowing through each arm 7 is suppressed, allowing a charging current to be passed within the allowable current range of its corresponding cell 9 even without charging resistor 5 described in Embodiments 1 and 2.

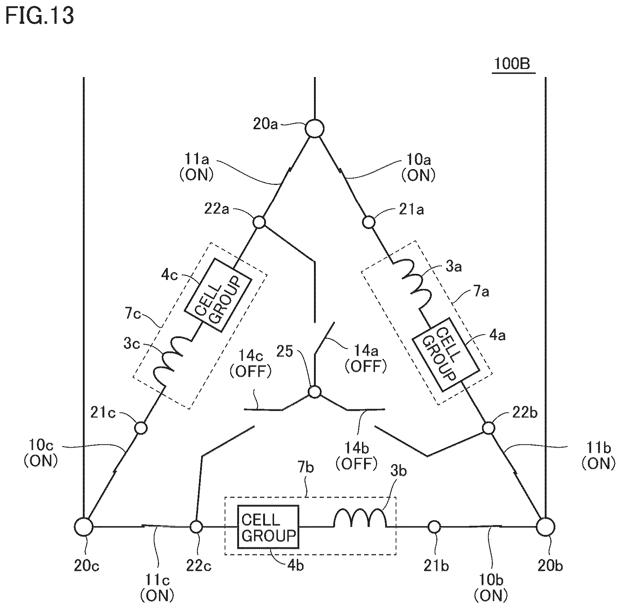

Fig. 13 shows a second aspect after the first phase shown in Fig. 12. Referring to Fig. 13, when the first initial charging of each power storage element 16 is complete, controller 60 turns off each of switches 14a to 14c, and then, turns on each of switches 11a to 11c. In this case, arms 7a to 7c are delta-connected, and a line voltage is applied to each arm 7.

Herein, due to the first initial charging described above, the voltage of each power storage element 16 has been charged to a voltage equivalent to the phase voltage. In addition, due to the line voltage being applied to each arm 7, its corresponding power storage element 16 is additionally charged with the difference voltage between the line voltage and the phase voltage (hereinafter also referred to as "second initial charging"). Thus, the charging current flowing through each arm 7 during the second initial charging after the first initial charging is "1-1/√3 ≈ 0.42" times the charging current flowing through each delta-connected arm 7 without being subjected to the first initial charging. Thus, also during the second initial charging, the charging current can be passed within the allowable current range of each cell 9 without charging resistor 5.

When the second initial charging is complete, each power storage element 16 is charged with a voltage equivalent to the line voltage. Thus, controller 60 can start operating power converter 30.

When even the above-described suppressed charging current exceeds the current rating of each cell 9, the charging resistor may be configured to be connected in series with switch 14. For example, the charging resistor is connected in series between each of switches 14a to 14c and common terminal 25. In Embodiment 3, however, since the charging current is suppressed as described above, the capacity of the charging resistor can be greatly reduced compared to the capacity of charging resistor 5 used in Embodiments 1 and 2.

### <Advantage>

Embodiment 3 can achieve the advantage of Embodiment 1 and eliminate the need for the charging resistor for initial charging or can use a charging resistor with a small capacity for initial charging.

### Other Embodiments.

The configurations illustrated as the embodiments described above are configuration examples of the present disclosure, and can be combined with another known technique, or can be modified, for example, can be partially omitted without departing from the gist of the present disclosure. In addition, in the above-described embodiments, the processes and configurations described in any other embodiment may be adopted and implemented as appropriate.

It should be understood that the embodiments disclosed herein have been presented for the purpose of illustration and non-restrictive in every respect. It is therefore intended that the scope of the present disclosure is defined by claims, not only by the above description, and encompasses all modifications and variations equivalent in meaning and scope to the claims.

### REFERENCE SIGNS LIST

3a to 3c reactor; 4a to 4c cell group; 5a to 5c charging resistor; 7a to 7c arm; 9 cell; 9a, 9b output terminal; 10a to 10c, 11a to 11c, 12a to 12c, 14a to 14c, 71 switch; 16 power storage element; 17 voltage detector; 18 resistor; 19N negative electrode line; 19P positive electrode line; 20a to 20c power terminal: 24a to 24c bus; 25 common terminal; 30 power converter; 50, 50A, 50B, 501 switchgear; 60 controller; 72 transformer; 80 three-phase AC power supply; 100, 100A, 100B power conversion apparatus; 1000 power conversion system; D1 to D4 diode; Q1 to Q4 switching element.

## Claims

1. A power conversion apparatus connected to a three-phase alternating-current (AC) power supply, the power conversion apparatus comprising:
a power converter including a first arm, a second arm, and a third arm; and
a switchgear connected to the first to third arms, wherein
each of the first to third arms includes a plurality of unit converters connected in series,
each of the plurality of unit converters includes
a plurality of switching elements, and
a power storage element connected to the plurality of switching elements, and
the switchgear includes
a first switch provided on a first end side of each of the first to third arms,
a second switch provided on a second end side of each of the first to third arms,
a bus connecting the first switch provided on the first end side of one arm of the first to third arms to the second switch provided on the second end side of another arm of the first to third arms, and
a power terminal provided on each bus for transmitting and receiving electric power between the power converter and the three-phase AC power supply.

2. The power conversion apparatus according to claim 1, wherein the power terminal is provided between the first switch and the second switch on the bus.

3. The power conversion apparatus according to claim 1 or 2, wherein
the switchgear further includes, for each arm of the first to third arms,
a charging resistor connected in series with a second end of the arm, and
a third switch connected in parallel to the charging resistor, and
for each arm of the first to third arms, the charging resistor connected in series with the second end of the arm is connected between the second end of the arm and the second switch provided on the second end side of the arm.

4. The power conversion apparatus according to claim 3, further comprising a controller to control the switchgear,
wherein the controller
during initial charging of each power storage element, controls each first switch and each second switch to be closed and each third switch to be opened, and
during a normal operation of the power converter after initial charging of each power storage element is complete, controls each first switch, each second switch, and each third switch to be closed.

5. The power conversion apparatus according to claim 1 or 2, wherein the switchgear further includes
a first terminal disposed between a first end of one arm of the first to third arms and the first switch provided on the first end side of the one arm,
a second terminal disposed between a second end of another arm of the first to third arms and the second switch provided on the second end side of the other arm, and
a charging resistor connected to the first terminal and the second terminal.

6. The power conversion apparatus according to claim 5, further comprising a controller to control the switchgear,
wherein the controller
during initial charging of each power storage element, controls each first switch to be closed and controls each second switch to be opened, and
during a normal operation of the power converter after initial charging of each power storage element is complete, controls each first switch and each second switch to be closed.

7. The power conversion apparatus according to claim 6, wherein the controller controls, during discharging of each power storage element, each first switch and each second switch to be opened.

8. The power conversion apparatus according to claim 1 or 2, wherein
the switchgear includes
for each arm of the first to third arms, a terminal disposed between a second end of the arm and the second switch provided on the second end side of the arm, and
for each of a plurality of the terminals, a third switch provided between the terminal and a common terminal, and
each third switch has
a first end connected to a corresponding one of the plurality of terminals, and
a second end connected to the common terminal.

9. The power conversion apparatus according to claim 8, wherein the switchgear further includes a charging resistor connected in series with the third switch.

10. The power conversion apparatus according to claim 8 or 9, further comprising a controller to control the switchgear,
wherein during initial charging of each power storage element, the controller controls each first switch and each third switch to be closed and each second switch to be opened, and then, controls each first switch and each second switch to be closed and each third switch to be opened.
